# EUROPEAN PATENT SPECIFICATION

(11) **EP 4 323 894 B1**
(45) Date of publication and mention of the grant of the patent: **21.10.2026**
(21) Application number: 22719636.7
(22) Date of filing: 29.03.2022
(51) Int. Cl.: G06F 21/00

(54) **MONITORING METHOD FOR MONITORING ENVIRONMENTS AND RELATED MONITORING DEVICE**
ÜBERWACHUNGSVERFAHREN ZUR ÜBERWACHUNG VON UMGEBUNGEN UND ZUGEHÖRIGE ÜBERWACHUNGSVORRICHTUNG
PROCÉDÉ DE SURVEILLANCE POUR ENVIRONNEMENTS DE SURVEILLANCE ET DISPOSITIF DE SURVEILLANCE ASSOCIÉ

(30) Priority: 14.04.2021 IT 202100009311
(43) Date of publication of application: 21.02.2024
(73) Proprietor: VLAB S.R.L., 46100 Mantova (MN) (IT)
(72) Inventor: BAUCE, Damiano, 46100 MANTOVA (MN) (IT)
(74) Representative: Mele, Emanuele
(86) International application number: PCT/IT2022/050071
(87) International publication number: WO 2022/219655

(56) References cited:
- WO-A1-2020/079587
- US-A1- 2018 025 649
- US-A1- 2019 188 830
- US-A1- 2020 395 105

## Description

The present invention relates to a method for monitoring and surveillance of environments, in particular outdoor environments, and a monitoring device for carrying out such method.

### Field of the invention

More in detail, the invention relates to a method for the monitoring and the surveillance of external environments, in particular construction sites, by means of photographic documentation that respects the privacy of the operators.

In the following, the description will be aimed at monitoring construction sites, for example, building sites, shipyards and the like, as well as events that last a long time. However, it is clear that the description itself should not be considered limited to this specific use.

### Prior art

As is well known, it is often desirable to have a video-photographic recording of construction sites, for example, to check the progress of the work on a work and/or to have the possibility of drawing up reports remotely, avoiding transfers.

However, the current regulations relating to privacy, such as the EU Regulation 2016/679 (GDPR) and/or the law 20/05/1970 n. 300 and subsequent updates (Workers' Statute), for the protection of people's privacy rights, have introduced stringent obligations to be carried out in the event of the installation of video cameras or other surveillance means using photographic documentation.

For these reasons, it is not always possible to install video cameras or the like to monitor outdoor environments, in particular construction sites, without infringing the current regulations.

WO2020079587 discloses a system for controlling and managing a process within an environment by means of artificial intelligence techniques.

US 2018/0025649 discloses a method for unmanned aerial vehicle (UAV) flight operation and privacy controls. In this method, based on geofence types, and UAV distance from a geofence, sensors and other devices connected to a UAV are conditionally operational. Image data collected during a UAV flight may be obfuscated by the UAV while in flight, or via a post-flight process using log data generated by the UAV.

### Scope of the invention

In light of the above, it is therefore the scope of the present invention providing a monitoring method, for the monitoring and the surveillance of environments, in particular construction sites, which allows to automatically obtain photographic documentation in compliance with the regulations in force for the privacy protection.

A further object of the present invention is to provide a device for carrying out this method that is resistant, safe, and reliable.

Furthermore, the object of the present invention is that this device requires low maintenance.

Finally, the purpose of the invention is to provide a method and a device for creating a timelapse video including images in compliance with the current legislation for privacy protection.

These and other results are obtained with a method according to the present invention, to obfuscate any element that is not in compliance with the current privacy regulations before storing the recorded images and/or sending them to external servers.

### Object of the invention

It is therefore specific object of the present invention to provide computer implemented method for monitoring environments in accordance with claim 1, a device for the remote monitoring of worksites in accordance with claim 9 and a computer program product in accordance with claim 12. Advantageous features are provided in the dependent claims.

### Brief description of the figures

The present invention will be now described, for illustrative but not limitative purposes, according to its preferred embodiments, with particular reference to the figures of the enclosed drawings, wherein:
figure 1 shows a perspective view of a monitoring device according to the present invention comprising an external container on which an optic is installed;
figure 2 schematically shows the individual components arranged inside the container of the monitoring device of figure 1;

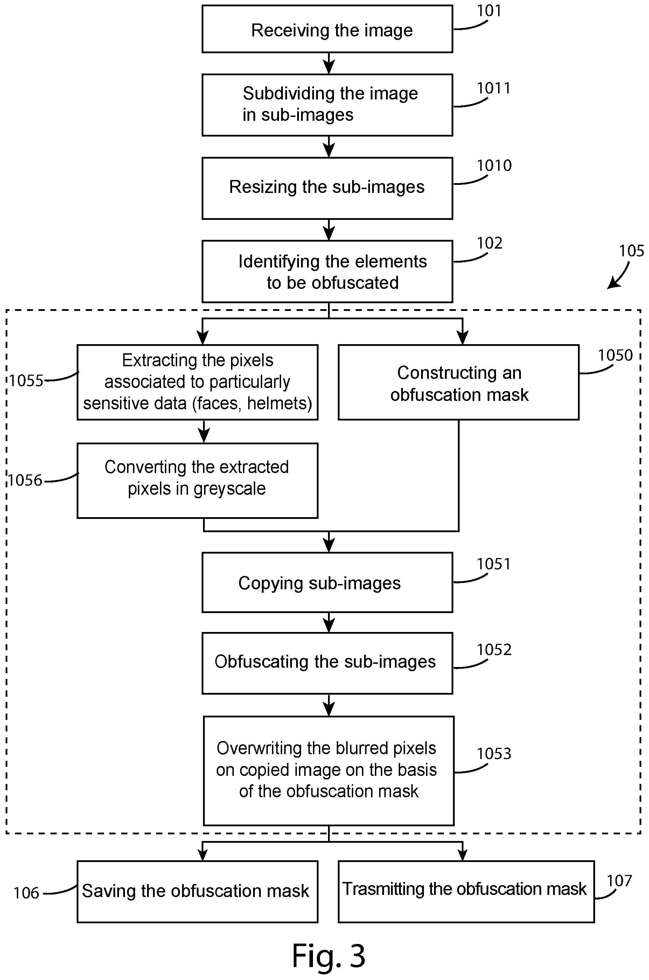

figure 3 shows a flowchart of a method according to the present invention, which can be performed by the device of figure 1;
figure 4 shows an image acquired by a method according to the present invention, in which the workers of a building site have been obfuscated by blurring with a Gaussian filter;
figure 5 shows the image of figure 4 in which the workers have been blurred by means of a mosaic blur;
figure 6 shows an example of a blurring mask constructed by means of a method according to the present invention for blurring the image of figures 4 - 5; and
figure 7 shows the temperature and humidity trend inside a device according to the present invention.

### Detailed description

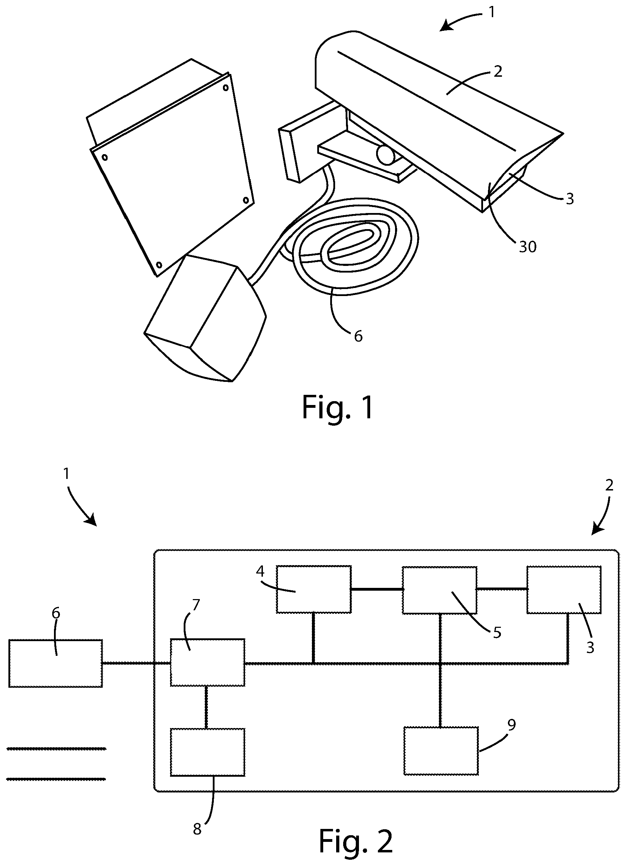

With reference to figures 1 - 2, it can be seen that a device 1 according to the present invention comprises:
a container element 2;
an image acquisition unit 3, or an optical unit 3, installed on the container element 2 for the acquisition of color photographic images;
a control unit 4, arranged inside the container element 2 and configured to receive the images from the image acquisition unit 3 and to process these images, so as to obscure any elements that are not in compliance with the current privacy regulations;
storage means (not shown) and/or data transmission means 5, arranged inside the container element 2 and connected to the control unit 4, for storing and/or sending to an external server the images processed by the control unit 4; and
electrical power supply means 6, 7, 8, for powering the image acquisition unit 3, the control unit 4, the storage means and/or the data transmission means 5.

The device 1 shown in figures 1 - 2 further comprises:
a temperature sensor (not shown), arranged inside the container 2 and connected to the control unit 4, for detecting the temperature inside the container;
and a heater 9, in particular an electric resistance 9, arranged inside the container 2 and connected to the control unit 4, for the reasons illustrated below.

The device 1 can also comprise support brackets (not shown), which can be coupled to the container 2, to allow the device 1 to be installed in different points on a construction site.

In particular, the container element 2, and any brackets, can be made of different materials, such as, for example, plastic or metal alloys. However, the containers 2 made of metal alloy are preferable, as they offer greater resistance to impact, to the action of atmospheric agents and to the wear.

In any case, the container 2 is preferably made in such a way as to be waterproof, so as to be able to allow the installation of the device 1 in any external environment and any climatic condition.

The image acquisition unit 3 comprises a lens 30 and an optical sensor for acquiring color images (not shown), which can be of different types. However, preferably, this image acquisition unit 3 comprises an optical sensor with resolutions greater than or equal to 8MP.

Specifically, the image acquisition unit 3 can comprise:
- an 8MP optical sensor, or
- a 12MP optical sensor.

The lens 30 of this image acquisition unit 3 may have different angular openings, selected on the basis of the space to be monitored.

In particular, if it is not possible to completely frame the site area with a standard angular aperture lens 30, it is possible to use one with a high angular aperture (panoramic) so that areas of the site are not cut off. It is however preferable to use a standard angular aperture lens 30 where possible, in order to have a more detailed and overall higher quality image.

Preferably, the image acquisition unit 3 is configured to acquire 4K images.

The control unit 4 can be any processor capable of processing the images acquired by the image acquisition unit 3, as illustrated below.

In one embodiment, this control unit 4 is preferably a single-board computer, also called "system on module", such as for example the Nvidia^{®} Jetson Nano^{™} system. In this way it is possible to minimize the overall dimensions of the device 1.

Preferably, this control unit 4 comprises the following features:
- 128 core GPU, such as for example the Nvidia Maxwell 128 CUDA^{®} core GPU;
- 1.43 GHz quad-core CPU, such as ARM Cortex-A57 MPCore Quad-core CPU;
- 4 GB of RAM, in particular, a 64-bit LPDDR 4GB RAM and 25.6 GB/s and 1600 MHz; and
- a Gigabit Ethernet type ethernet port, M.2 Key E.

In fact, these technical specifications allow image obfuscation even on 4K quality acquisition images.

The data transmission means 5 can be a Wi-Fi modem or router, in particular Wi-Fi 4g LTE, which guarantees the wireless connection to the internet. Said data transmission means 5 can also comprise Ethernet ports for connecting the control unit 4 and the image acquisition unit 3 to the internet and to each other.

In particular, the data transmission means 5 can be configured to communicate with an external server, for example by sending the blurred images by means of SFTP protocols (FTP + SSH).

The electrical power supply means 6, 7, 8 comprise:
- electrical connection means 6, connectable to an external power source, such as for example a socket 6, which can be connected to the electrical network or cables, which can be connected to an external battery or a solar panel;
- a transformer 7, connected to the electrical connection means 6 and to the elements 3, 4, 5 of the device 1 to be powered; and
- an uninterruptible power supply 8, or buffer battery 8, connected to the transformer 7 to supply energy to the device 1 in the event of an interruption of the external power supply.

The uninterruptible power supply 8, therefore, ensures that the device works even in critical conditions, for example in case of a fault in the electrical network of the construction site. In this way, the maintenance of device 1 is reduced to the minimum.

As mentioned, the control unit 4 is configured to obfuscate sensitive data, in compliance with the current legislation on the protection of privacy (GDPR and Art. 4 of the workers' statute).

This execution is real-time, i.e. it takes place directly inside the device 1 at the very moment in which a photograph is taken.

In particular, the control unit 4 is configured to obfuscate sensitive data such as faces, license plates, vehicles and people, through the execution of a method comprising the following steps:
- receiving 101 the signal of one or more color photographic images from the image acquisition unit 3;
- identifying 102, by means of an image recognition algorithm, the pixels of each received image associated with predetermined elements, in particular people, faces, safety helmets, motor vehicles and/or license plates; and
- processing 105, for each received image, a blurred image, in which the pixels identified in the identification step 102 are blurred by means of an obfuscation algorithm, leaving the remaining pixels unchanged; and
- saving 106, by means of the storage means and/or transmitting 107 to an external server, by means of data transmission means 5, each processed blurred image, deleting the relative image received in the receiving step 101.

The possible results of this algorithm of obfuscation are shown in images 4 - 7.

The receiving step 101 may include receiving the image shot directly from the image acquisition unit 3 inside the device 1 or from an external image acquisition unit, via SFTP protocol.

The identification step 102 can be based on a neural network for the recognition of the sensitive data contained in the images. In particular, this neural network can be a CNN ("Convolutional Neural Network") type network, preferably a YOLO ("You Only Look Once") type network, more preferably a YOLOv4 type. In fact, YOLO-type neural networks represent a highly reliable real-time object detection system, capable of recognizing objects with more precision and in less time than other prior art algorithms. The YOLOv4 neural network, when executed, performs operations on the input image, searching for objects similar to the dataset of elements that it has been trained to detect.

In particular, this neural network is re-trained to perfect the ability to detect sensitive elements in an environment, especially people.

This algorithm works with images of any size, reformatting them to a predetermined size, so as to be able to detect objects in a predetermined number of pixels. By way of example, this predetermined size can be 416x416 pixels.

Therefore, the receiving step 101 can comprise the sub-step 1010 of resizing the image to an image of a predetermined size, as better illustrated below.

In particular, the control unit 4 can receive in the receiving step 101, images of larger dimensions than said predetermined dimension, and compress them to said predetermined dimension. By way of example, the control unit can receive a 4K image of 3840x2160 size and compress it to a predetermined size equal to 416x416. In this downsizing step1010, information will therefore be lost.

In order to avoid this problem, it is possible to provide a step 1011 for dividing the image into a plurality of sub-images. This technique can be indicated with the expression "tiling".

The control unit 4 can then be configured to process each sub-image, or a sub-set of sub-images, resizing them 1010, and processing them with the subsequent steps of the obfuscation algorithm.

In this way, it is possible to have less information loss of the processed images (thus guaranteeing to detect as much sensitive data as possible), while allowing a quick execution of the obfuscation algorithm. In fact, each sub-image can be parallel processed.

Furthermore, the division step 1011 can provide for a non-uniform division of the image, in order to have smaller dimensions sub-images (and which will therefore undergo less compression in the resizing step 1010) in potential areas of interest, and larger sub-images in areas that potentially will not be subject to obfuscation.

In particular, an image can be divided into an upper portion and a lower portion, each in turn divided into a number of sub-images greater than or equal to 1.

By way of example, it is possible to divide an image into an upper portion including the sky, in which there will probably be no elements to be obscured, and in a lower portion, including the construction site to be monitored, where there will be elements to be obscured.

In this case, during the subdivision step 1011, the upper portion may not be further subdivided, or it may be divided into two sub-images, while the lower portion may be subdivided into a number of sub-images greater than or equal to two. By way of example, starting from a 4K image of 3840x2160 dimensions, the upper portion comprising the sky can be divided into two sub-images of 1920x1080 dimensions, while the lower portion can be divided into four sub-images of 860x1080 dimensions. Each sub-image is processed independently in the identification step 102, and the elements identified in each sub-image are reported on the main image in the processing step 105 to create the blurred image to be saved and/or transmitted in the saving 106 and/or transmission 107 step.

This algorithm is configured/trained so as to recognize only a given type of elements to be detected, in particular, people and vehicles.

The algorithm used in the identification step 102 can therefore be configured to delimit a detected element with a contour, for example of a substantially rectangular shape.

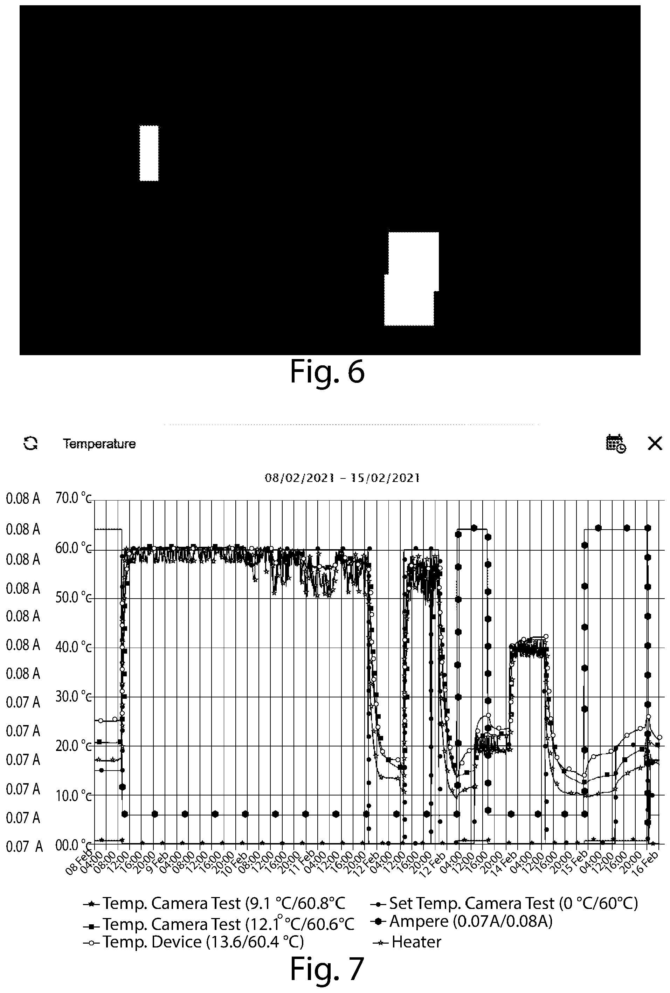

As shown in figure 6, the pixels associated with the elements to be obfuscated can be arranged inside geometric shapes (rectangles) taking, for each element identified in the identification step 102, the coordinates of the relative upper left corner and of the relative lower right corner, and associating a geometric shape to such pairs of points.

Geometric shapes can be for example a rectangle or an ellipse. Advantageously, a selection with an elliptical shape makes it possible obtaining images having a better aesthetic than the images obtained with rectangular-shaped selections, since the blurred area is less evident.

The processing step 105 of the blurred image can comprise the following sub-steps:
- constructing an obfuscation mask 1050 for each received image, in which said obfuscation mask is a two-color image having the same dimensions as the relative received image, wherein the pixels within the areas identified in the identification step 102 are associated with a first color, and the remaining pixels are associated with a second color.
- creating a first copy 1051 of the received image,
- blurring 1052, using the obfuscation algorithm, the copied image, and
- overwriting 1053 on the pixels of the non-blurred image (received image) the pixels of the blurred image (image copy), at the points where the mask has said first color, in order to obtain the final blurred image.

In the embodiment shown in figure 6, the first color is white, while the second color is black.

In this way, it is possible providing robust obfuscation of each received image.

Furthermore, a blurred image is gotten in which all the details that must not be blurred are clearly visible, avoiding a possible blurring of the neighboring pixels to those to be blurred.

Before the processing step 105, the following step can also be provided:
- checking that at least one pixel of at least one received image has been identified in the identification step 102 as associated with sensitive data, for example by verifying that the array that contains the detected pixels has a non-zero dimension.

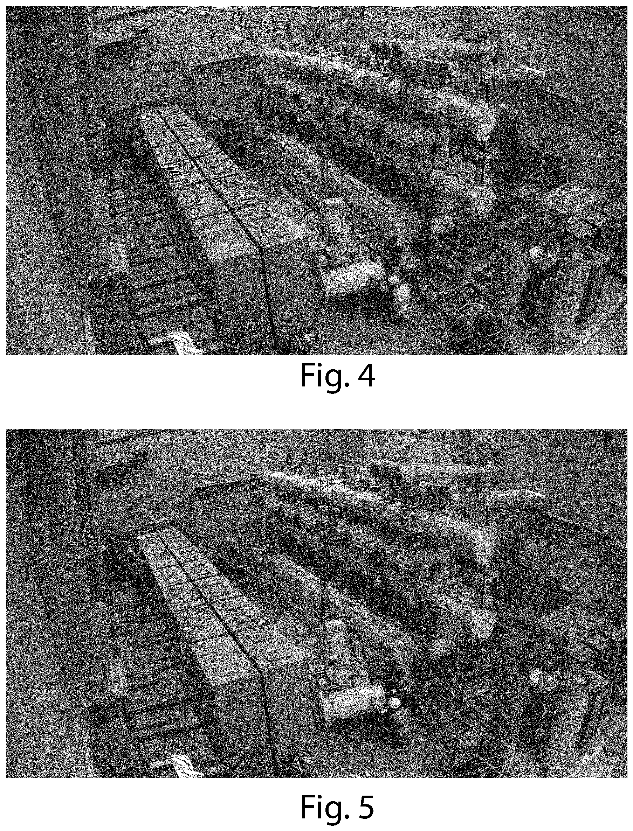

The obfuscation algorithm used in the obfuscation step 1052 can be based on a Gaussian filter, as shown in figure 4, or on a mosaic obfuscation filter, as shown in figure 5.

In particular, the obfuscation algorithm used in the obfuscation step 1052 can be based on one of the functions implemented in the OpenCV library, such as GaussianBlur (), for the Gaussian filter, receives in input the image to be blurred and a value that corresponds to the intensity of the blur, and supplies a blurred image in the output. The value for the intensity of the blur can be fixed or can be set by the user. In particular, the higher this value is, the more intense is the blur of the image. In general, this value must be an odd integer.

The mosaic obfuscation advantageously allows obfuscating a sensitive element in a less recognizable way than the obfuscation with a Gaussian filter, and preventing third parties from recovering the sensitive information obscured in the blurred image using specific filters (such as the Wiener filter, the Tikhonov regularization, the Lucy-Richardson filter and/or the Blind deconvolution).

Figure 5 shows an example of mosaic blurring that affects only the face of a person to be blurred. However, it is possible to extend the mosaic blurring to the whole person.

In order to further increase the safety of blurred images, it is possible to foresee a step in which the portion of the image to be blurred is converted to grayscale prior to the obfuscation step 1052.

In this way, it is impossible to recognize the blurred object on the base of a distinctive color, such as the color of the helmet.

In particular, the control unit 4 can be configured to convert only people's faces and their headgear (for example helmets) with a gray scale coloring.

Therefore, the processing step 105 can comprise the following sub-steps:
- extracting 1055 the pixels of the identified elements associated with particularly sensitive data (for example, they are people's faces);
- converting 1056 the extracted pixels to grayscale, for example by covering them with black and white shades, in order to make the colors of the person's face and his headgear unrecognizable.

The control unit 4 can also be configured to receive input data relating to predetermined areas of the acquired image, which must always be obscured, for example in case the lens 30 of the image acquisition unit 3 captures areas that are not within the user's competence, such as public roads.

**It** is possible to set an area for example by specifying the coordinates of the image x, y that delineate the perimeter. For example, 3 coordinates may be sufficient to identify an area to be blurred. By way of example, this operation can be implemented always using the OpenCV library, in particular the fillConvexPoly () function, which receives the selected points as input, draws a polygon in the mask built in construction step 1050, following the input data points and colors the pixels inside said polygon with said first color (white). So that once the final image is processed, the area is blurred.

**In** summary, the control unit 4 can receive as input:
- the type of elements to be identified in the identification step 102, for example people, faces, vehicles and/or plates;
- the number of sub-images into which dividing the image in the division step 1021, which can also be provided as a first number of sub-images for an upper portion of the image, and a second number of sub-images for a lower portion (especially the upper half and the lower half);
- the shape of the geometries to be used for the identification and the obfuscation, for example, rectangular or elliptical;
- the type of obfuscation to be applied in the obfuscation step 1052, for example of the Gaussian or mosaic type;
- whether to convert a predetermined type of elements to grayscale, before the obfuscation step 1052;
- whether there are areas to be obfuscated always within the acquired image, for example by indicating the number of such areas and the coordinates of the points that define these areas.

These input values can be set via a graphical interface or sent via the command line.

Furthermore, the control unit 4 can be configured to be periodically automatically updated, so as to avoid an operator having to climb to the heights in which it is installed, which can also be relevant heights.

The control unit 4 during the execution step can also be configured to write the execution steps of the algorithm on a log file to keep track of the execution of any errors.

In the saving step 106 the control unit can save the blurred images locally and delete the original images so that they are not accessible.

In addition, or alternatively, in transmission step 107, the control unit 4 can send the blurred images to an external server by means of the data transmission means 5 (for example using an SFTP protocol).

However, in the event of a transfer error, the blurred image will be lost if not saved locally in saving step 106.

The primary server can then archive the transferred image and make it accessible from the outside.

It is therefore possible to create web pages /applications, for example protected by username and password, to access the blurred images saved in the external server, without the need for on-site inspections.

However, it is preferable that the images are saved on an external server, to avoid possible saving problems.

In particular, images can be saved on multiple servers at the same time, to ensure that they are not lost and to avoid the need for manual backups.

Furthermore, the web page/application can be programmed to show a preview of all devices 1 assigned to a predetermined user, in order to select the respective gallery. Devices can also be separated into active and inactive devices. It is also possible to provide a map within the web page, on which the position of your devices is marked and from which it is possible to access the respective display interface. Secondly, "overview" pages can be provided, which contain a preview of one or more devices, from which it is possible to connect to the page that displays the last image taken, with relative timestamp (date and time of shooting) printed in the top of the photo.

The user can therefore have two different photo viewing interfaces of each available device, through which he can scroll, view, and download the photos.

The blurred photos can be sorted in the gallery from the most recent to the oldest, and can be categorized with different filters, for example by being divided by the month in which they were taken.

It will be possible to locally download the photos, selecting for example the photos taken in a particular month, etc.

In this web page/application it is also possible to provide an indication of the weather conditions of the area where the device 1 is installed, to allow its monitoring. It is also possible to save notes/generate alarm signals relating to particular bad weather conditions.

Optics 3 can also be remotely reprogrammed, for example being possible for a user to choose which days/times to take a picture.

It is also possible for a user to indicate the name with which the frames will be saved and what information to keep (for example temperature, weather conditions, etc.), or select frames for creating a video with a certain number of frames per second (fps), this can also be controlled by the user.

The remote server can be configured to create automatic videos with blurred images, which can be:
- daily: video formats with photos of the day just passed.
- weekly: video formats with photos of the past week.
- monthly: video formats with photos of the past month.

The single user can to the external server the type of video to be created.

In the event of a failure or overload of the primary server, a service failure could occur.

In these cases, the service recovery mechanism provides for:
- activation of a new instance of the server that has failed
- installation of the necessary software in the new instance
- migration of the static IP from the old instance to the novel
- deactivation of the old instance

The hardware features of the new instance are defined according to the cause of the service interruption:
- if the service was interrupted due to a hardware failure, the type of the new instance will be the same as the one that had the failure;
- if the service was interrupted due to the overload of the hardware resources of the old instance, then the new one will be an instance with increased hardware resources compared to the old one (for example, if the old instance was of T3.medium type, the new one will be of T3.large type); this procedure is to be carried out manually.

There is also an alert mechanism via email, which can notify certain conditions.

The active alarms are:
- alarm for too frequent uploads: if a device 1 makes more than 20 uploads within an hour, an alert is sent to the administrators, notifying the error and the name of the device concerned. The check is done every hour by the primary server;
- night upload alarm: if a device uploads during the night, an alarm is sent to the administrators, notifying the error and the name of the affected device. The control is done by the primary server;
- small size image upload alarm: if a device sends photos with a size less than 100kB, an alarm is sent to the administrators, notifying the error and the name of the affected device. The check is done by the primary server upon receipt of the image;
- offline device alarm: if a device does not upload for a set time, an alert is sent to the administrators and the users (if they have activated it), to whom the device is assigned, notifying the error and the name of the affected device; The "set time" of this alarm is, by default, 1 hour but can be changed; the control is carried out by the primary server at regular "set time" intervals; and
- hardware resource saturation alarms: If the hardware resources (CPU, RAM,...) of the primary server exceed a limit threshold, an alarm is sent to the administrators, notifying the anomaly. Monitoring and sending of the alarm can be done from a control server.

Advantageously, a system comprising a plurality of devices of the type described is capable of withstanding increases in the workload. The increase in the workload of the system is in any case known in advance as it depends on the number of devices and the frequency with which the photos are taken.

If the workload exceeds the maximum load of the primary server, it is necessary to improve the hardware features.

The storage space of the primary server data disk (where the images are stored) can easily be increased with the following procedure:
- create a safety backup of the data disk
- unmount the data disk from the file system
- resize the data disk
- mount the data disk in the file system
- if successful, the backup created in the first step is deleted, if it fails, the backup is restored.

The heater 9 is, as seen, useful if the device is installed in environments with particularly harsh climates.

In this case, the control unit 4 will be configured to receive the temperature detected by the temperature sensor, compare it with a predetermined threshold, and, if this temperature is lower than the predetermined threshold, activate the heater 9, so as to prevent malfunction of the elements 3, 4, 5 inside the container 2.

Various tests were carried out to verify the correct operation of the device 1 equipped with the heater 9 in the most extreme and different climatic conditions.

During a function test, device 1 was placed inside a test chamber, the climate inside the chamber was changed, and it was waited several days to see the effect on device 1 operation, in particular, a test chamber with internal dimensions equal to 90x90x90 cm with insulated walls was used. Inside it has been inserted:
- a heating module (for example an electric stove)
- an air intake pushed by a turbine for cold ventilation
- a humid air generator (air and water with a percentage that can be controlled by a software application)
To monitor the progress of the test, there were inserted:
- two devices 1;
- a temperature sensor; and
- a humidity sensor.
During the tests the following parameters were monitored:
- temperature;
- humidity;
- atmospheric pressure
- voltage supplied by transformer 7;
- current absorbed by transformer 7; and
- quality of the photos taken by the device 1.
The test carried out in this way lasted 8 days:
**day 1:**
   Temperature brought to 60° C and maintained
   Humidity brought to 22% and maintained
**day 2:**
   Temperature maintained at 60° C
   Humidity maintained at 22%
**day 3:**
   Temperature maintained at 60° C
   Humidity maintained at 22%
**day 4:**
   Temperature maintained at 60° C and lowered to 15° C at 21:00
   Humidity maintained at 22% and increased to 80% at 21:00 : 00
**day 5:**
   Temperature increased to 60° C at 9:00 and lowered to 15° C at 21:00
   Humidity lowered to 22% at 9:00 and increased to 80% at 21:00
**day 6:**
   Temperature increased to 60° C at 9:00 and lowered to 15° C at 21:00
   Humidity lowered to 22% at 9:00 and increased to 80% at 21:00
**day 7:**
   Temperature increased to 20° C at 9:00 and increased to 40° C at 9:00 pm
   Humidity lowered to 40% at 3:00 am, increased to 80% at 9:00 am and lowered to 40% at 9:00 pm
**Day 8:**
   Temperature maintained at 15 ~ 20° C and increased to 20 ~ 25° C at 19:00
   Humidity maintained at 40 ~ 60%

**Result:** The results of the conducted test are shown in figure 7. During the entire duration of the test the device 1 did not exhibit any abnormal operation, maintaining excellent image quality.

### Advantages

Device 1 is configured to obfuscate sensitive data as soon as the photo is taken, without those photos being sent to external servers in non-obfuscated mode. In this way, the images are devoid of personal data (the internet is an insecure network), in compliance with the requirements of the privacy legislation in force (GDPR and Article 4 of the Workers' Statute).

The device 1 just described can also operate for long periods, even in adverse weather conditions.

Device 1 is highly customizable, as it is possible to program the time intervals between two successive photos or the obfuscation mode to be used.

The installation of device 1 is immediate: once connected to an electric current source and positioned, all the setup procedures can be done remotely.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Computer implemented method for monitoring environments, in particular worksites and the like, comprising the following steps:
receiving (101) the signal of one or more color photo images;
identifying (102) by means of an image recognition algorithm, the pixels of each received image associated to predetermined recognition elements, in particular people, faces, helmets, vehicles and/or plates;
processing (105) each received image so as to get a blurred image,
wherein the pixels identified in the identifying step (102) are blurred by means of a blurring algorithm, leaving unaltered the remaining pixels, and
saving (106), and/or transmitting (107) to a server each processed blurred image, deleting the corresponding image received in said receiving step (101).

2. Method according to the preceding claim, **characterized in that** said at least one portion of identified pixels comprises the faces of identified people and/or the headgears of identified people and/or vehicles and/or vehicles' plates.

3. Method according to any one of the preceding claims, **characterized in that** said processing step (105) comprises the following sub-steps:
building (1050) a blurring mask for each received image,
wherein said blurring mask is a two colors image having the same dimensions of the corresponding received image, and
wherein a first color is associated with the pixels corresponding to the identified pixels in the identifying step (102) and a second color is associated with the remaining pixels;
making (1051) a first copy of the received image;
blurring (1052), by means of said blurring algorithm, said received image or said first copy; and
overwriting (1053) the blurred pixels associated to said first color on said first copy or on said received image so as to get said blurred image.

4. Method according to any one of the preceding claims, **characterized in that** said receiving step (101) comprises the following sub-steps:
dividing (1011) each received image in a plurality of sub-images; and
resizing (1010) each sub-image to a predefined dimension;
wherein each sub-image is processed independently in said subsequent identifying steps (102).

5. Method according to the preceding claim, **characterized in that** in said dividing step (1011) the image is divided into non-uniform sub-images, wherein predetermined areas of interest are included in sub-images of a first dimension, and the remaining areas are included in sub-images of a second dimension, greater than said first dimension.

6. Method according to any one of the preceding claims, **characterized in that**, besides the areas identified in said identifying step (102) also further predefined areas are blurred.

7. Method according to any one of the preceding claims **characterized in that** the pixels identified in said identifying step (102) are inside areas with an elliptical or rectangular shape and/or **in that** said blurring algorithm is based on a gaussian filter or on a mosaic filter.

8. Method according to any one of the preceding claims, wherein said processing step (105) of the blurred image comprises the sub-step of converting (1056) in greyscale at least one portion of the pixels identified in the identifying step (102) before blurring by means of said blurring algorithm.

9. Device (1) for the remote monitoring of worksites comprising
an image acquisition unit (3), for the acquisition of color photo images;
a control unit (4), installed at said image acquisition unit (3) and connected for receiving the images from the image acquisition unit (3) and to process them by means of a method according to any one of the preceding claims; and
storing means, connected to said control unit (4), for storing the processed blurred images and/or means for transmitting data (5), connected to said control unit (4), for sending the processed blurred images to an external server.

10. Device (1) according to the preceding claim, is **characterized in that** it comprises a case (2) for housing said control unit (4) and said storing means and/or data transmission means (5).

11. Device (1) according to the preceding claim, **characterized in that** it comprises
at least one temperature sensor, housed in said case (2) for detecting the temperature inside said case (2), and
a heater (9), housed in said case (2) and connected to said control unit (4),
wherein said control unit (4) is configured for receiving the temperature detected by said at least one temperature sensor, and, if said detected temperature is below a predetermined threshold, activating said heater (9) for increasing the temperature inside said case (2).

12. A computer program product comprising instructions which when executed by a control unit (4) of a device (1) perform the method of any one of claims 1-8.

## Patentansprüche

1. Computerimplementiertes Verfahren zur Überwachung von Umgebungen, insbesondere von Baustellen und dergleichen, umfassend die folgenden Schritte:
Empfangen (101) des Signals eines oder mehrerer Farbfotobilder;
Identifizieren (102), mittels eines Bilderkennungsalgorithmus, der Pixel jedes empfangenen Bildes, die vorbestimmten Erkennungselementen zugeordnet sind, insbesondere Personen, Gesichtern, Helmen, Fahrzeugen und/oder Kennzeichen;
Verarbeiten (105) jedes empfangenen Bildes, um ein unscharf gemachtes Bild zu erhalten, wobei die in dem Identifizierungsschritt (102) identifizierten Pixel mittels eines Unschärfealgorithmus unscharf gemacht werden, während die übrigen Pixel unverändert bleiben, und
Speichern (106) und/oder Übertragen (107) jedes verarbeiteten unscharf gemachten Bildes an einen Server, wobei das entsprechende in dem Empfangsschritt (101) empfangene Bild gelöscht wird.

2. Verfahren nach dem vorhergehenden Anspruch, **dadurch gekennzeichnet, dass** der mindestens eine Abschnitt identifizierter Pixel die Gesichter identifizierter Personen und/oder die Kopfbedeckungen identifizierter Personen und/oder Fahrzeuge und/oder Fahrzeugkennzeichen umfasst.

3. Verfahren nach einem der vorhergehenden Ansprüche, **dadurch gekennzeichnet, dass** der Verarbeitungsschritt (105) die folgenden Teilschritte umfasst:
Erzeugen (1050) einer Unschärfemaske für jedes empfangene Bild,
wobei die Unschärfemaske ein zweifarbiges Bild mit denselben Abmessungen wie das entsprechende empfangene Bild ist, und
wobei eine erste Farbe den Pixeln zugeordnet ist, die den in dem Identifizierungsschritt (102) identifizierten Pixeln entsprechen, und eine zweite Farbe den übrigen Pixeln zugeordnet ist;
Erstellen (1051) einer ersten Kopie des empfangenen Bildes;
Unschärfung (1052) des empfangenen Bildes oder der ersten Kopie mittels des Unschärfealgorithmus; und
Überschreiben (1053) der der ersten Farbe zugeordneten unscharf gemachten Pixel auf der ersten Kopie oder auf dem empfangenen Bild, um das unscharf gemachte Bild zu erhalten.

4. Verfahren nach einem der vorhergehenden Ansprüche, **dadurch gekennzeichnet, dass** der Empfangsschritt (101) die folgenden Teilschritte umfasst:
Unterteilen (1011) jedes empfangenen Bildes in eine Vielzahl von Teilbildern; und Ändern der Größe (1010) jedes Teilbildes auf eine vorbestimmte Abmessung;
wobei jedes Teilbild in dem nachfolgenden Identifizierungsschritt (102) unabhängig verarbeitet wird.

5. Verfahren nach dem vorhergehenden Anspruch, **dadurch gekennzeichnet, dass** in dem Unterteilungsschritt (1011) das Bild in nicht einheitliche Teilbilder unterteilt wird, wobei vorbestimmte interessierende Bereiche in Teilbildern einer ersten Abmessung enthalten sind und die übrigen Bereiche in Teilbildern einer zweiten Abmessung enthalten sind, die größer als die erste Abmessung ist.

6. Verfahren nach einem der vorhergehenden Ansprüche, **dadurch gekennzeichnet, dass** zusätzlich zu den in dem Identifizierungsschritt (102) identifizierten Bereichen auch weitere vorbestimmte Bereiche unscharf gemacht werden.

7. Verfahren nach einem der vorhergehenden Ansprüche, **dadurch gekennzeichnet, dass** die in dem Identifizierungsschritt (102) identifizierten Pixel innerhalb von Bereichen mit elliptischer oder rechteckiger Form liegen und/oder dass der Unschärfealgorithmus auf einem Gauß-Filter oder einem Mosaikfilter basiert.

8. Verfahren nach einem der vorhergehenden Ansprüche, wobei der Verarbeitungsschritt (105) des unscharf gemachten Bildes den Teilschritt des Umwandelns (1056) mindestens eines Teils der in dem Identifizierungsschritt (102) identifizierten Pixel in Graustufen vor dem Unschärfung mittels des Unschärfealgorithmus umfasst.

9. Vorrichtung (1) zur Fernüberwachung von Baustellen, umfassend
eine Bilderfassungseinheit (3) zur Erfassung von Farbfotobildern;
eine Steuereinheit (4), die an der Bilderfassungseinheit (3) installiert und dazu verbunden ist, die Bilder von der Bilderfassungseinheit (3) zu empfangen und diese mittels eines Verfahrens nach einem der vorhergehenden Ansprüche zu verarbeiten; und
Speichermittel, die mit der Steuereinheit (4) verbunden sind, zum Speichern der verarbeiteten unscharf gemachten Bilder und/oder Datenübertragungsmittel (5), die mit der Steuereinheit (4) verbunden sind, zum Senden der verarbeiteten unscharf gemachten Bilder an einen externen Server.

10. Vorrichtung (1) nach dem vorhergehenden Anspruch, **dadurch gekennzeichnet, dass** sie ein Gehäuse (2) zur Aufnahme der Steuereinheit (4) und der Speichermittel und/oder der Datenübertragungsmittel (5) umfasst.

11. Vorrichtung (1) nach dem vorhergehenden Anspruch, **dadurch gekennzeichnet, dass** sie umfasst mindestens einen Temperatursensor, der in dem Gehäuse (2) aufgenommen ist, um die Temperatur innerhalb des Gehäuses (2) zu erfassen, und
eine Heizeinrichtung (9), die in dem Gehäuse (2) aufgenommen und mit der Steuereinheit (4) verbunden ist,
wobei die Steuereinheit (4) dazu ausgebildet ist, die von dem mindestens einen Temperatursensor erfasste Temperatur zu empfangen und, falls die erfasste Temperatur unter einem vorbestimmten Schwellenwert liegt, die Heizeinrichtung (9) zu aktivieren, um die Temperatur innerhalb des Gehäuses (2) zu erhöhen.

12. Computerprogrammprodukt, umfassend Anweisungen, die, wenn sie von einer Steuereinheit (4) einer Vorrichtung (1) ausgeführt werden, das Verfahren nach einem der Ansprüche 1-8 ausführen.

## Revendications

1. Procédé mis en œuvre par ordinateur pour la surveillance d'environnements, en particulier de chantiers et analogues, comprenant les phases suivantes :
recevoir (101) le signal d'une ou plusieurs images photographiques en couleur ;
identifier (102), au moyen d'un algorithme de reconnaissance d'images, les pixels de chaque image reçue associés à des éléments de reconnaissance prédéterminés, en particulier des personnes, des visages, des casques, des véhicules et/ou des plaques d'immatriculation ;
traiter (105) chaque image reçue de manière à obtenir une image floutée, dans lequel les pixels identifiés lors de la phase d'identification (102) sont floutés au moyen d'un algorithme de floutage, en laissant inchangés les pixels restants, et
enregistrer (106) et/ou transmettre (107) à un serveur chaque image floutée traitée, avec suppression de l'image correspondante reçue lors de ladite phase de réception (101).

2. Procédé selon la revendication précédente, **caractérisé en ce que** ladite au moins une portion de pixels identifiés comprend les visages des personnes identifiées et/ou les couvre-chefs des personnes identifiées et/ou les véhicules et/ou les plaques d'immatriculation des véhicules.

3. Procédé selon l'une quelconque des revendications précédentes, **caractérisé en ce que** ladite phase de traitement (105) comprend les sous-phases suivantes :
construire (1050) un masque de floutage pour chaque image reçue,
dans lequel ledit masque de floutage est une image à deux couleurs ayant les mêmes dimensions que l'image reçue correspondante, et
dans lequel une première couleur est associée aux pixels correspondant aux pixels identifiés lors de la phase d'identification (102) et une seconde couleur est associée aux pixels restants ;
réaliser (1051) une première copie de l'image reçue ; flouter (1052), au moyen dudit algorithme de floutage, ladite image reçue ou ladite première copie ; et
écraser (1053) les pixels floutés associés à ladite première couleur sur ladite première copie ou sur ladite image reçue de manière à obtenir ladite image floutée.

4. Procédé selon l'une quelconque des revendications précédentes, **caractérisé en ce que** ladite phase de réception (101) comprend les sous-phases suivantes :
diviser (1011) chaque image reçue en une pluralité de sous-images ; et
redimensionner (1010) chaque sous-image à une dimension prédéfinie ; dans lequel chaque sous-image est traitée indépendamment lors de ladite phase d'identification (102) subséquente.

5. Procédé selon la revendication précédente, **caractérisé en ce que**, lors de ladite phase de division (1011), l'image est divisée en sous-images non uniformes, dans lequel des zones d'intérêt prédéterminées sont incluses dans des sous-images d'une première dimension, et les zones restantes sont incluses dans des sous-images d'une seconde dimension, supérieure à ladite première dimension.

6. Procédé selon l'une quelconque des revendications précédentes, **caractérisé en ce que**, outre les zones identifiées lors de ladite phase d'identification (102), d'autres zones prédéfinies sont également floutées.

7. Procédé selon l'une quelconque des revendications précédentes, **caractérisé en ce que** les pixels identifiés lors de ladite phase d'identification (102) sont à l'intérieur de zones de forme elliptique ou rectangulaire et/ou **en ce que** ledit algorithme de floutage est basé sur un filtre gaussien ou sur un filtre mosaïque.

8. Procédé selon l'une quelconque des revendications précédentes, dans lequel ladite phase de traitement (105) de l'image floutée comprend la sous-phase de convertir (1056) en niveaux de gris au moins une portion des pixels identifiés lors de la phase d'identification (102), avant leur floutage au moyen dudit algorithme de floutage.

9. Dispositif (1) pour la surveillance à distance de chantiers, comprenant
une unité d'acquisition d'images (3), destinée à l'acquisition d'images photographiques en couleur ; une unité de commande (4), installée au niveau de ladite unité d'acquisition d'images (3) et connectée de manière à recevoir les images provenant de l'unité d'acquisition d'images (3) et à les traiter au moyen d'un procédé selon l'une quelconque des revendications précédentes ; et
des moyens de stockage, connectés à ladite unité de commande (4), destinés à stocker les images floutées traitées et/ou des moyens pour transmettre de données (5), connectés à ladite unité de commande (4), destinés à envoyer les images floutées traitées à un serveur externe.

10. Dispositif (1) selon la revendication précédente, **caractérisé en ce qu'**il comprend un boîtier (2) destiné à loger ladite unité de commande (4) et lesdits moyens de stockage et/ou moyens de transmission de données (5).

11. Dispositif (1) selon la revendication précédente, **caractérisé en ce qu'**il comprend
au moins un capteur de température, logé dans ledit boîtier (2), destiné à détecter la température à l'intérieur dudit boîtier (2), et
un dispositif de chauffage (9), logé dans ledit boîtier (2) et connecté à ladite unité de commande (4),
dans lequel ladite unité de commande (4) est configurée pour recevoir la température détectée par ledit au moins un capteur de température et, si ladite température détectée est inférieure à un seuil prédéterminé, pour activer ledit dispositif de chauffage (9) afin d'augmenter la température à l'intérieur dudit boîtier (2).

12. Un produit de programme d'ordinateur comprenant des instructions qui, lorsqu'elles sont exécutées par une unité de commande (4) d'un dispositif (1), mettent en œuvre le procédé de l'une quelconque des revendications 1 à 8.
